# EUROPEAN PATENT APPLICATION

(11) **EP 4 164 304 A1**
(43) Date of publication of application: **12.04.2023**
(21) Application number: 21201783.4
(22) Date of filing: 08.10.2021
(51) Int. Cl.: H04W 56/00

(54) **DEVICE AND METHOD FOR CLOCK SYNCHRONISATION IN A WIRELESS NETWORK**

(71) Applicant: Imec VZW, 3001 Leuven (BE); Universiteit Gent, 9000 Gent (BE)
(72) Inventor: ASLAM, Muhammad, 9000 Gent (BE); JIAO, Xianjun, 9052 Gent (BE); LIU, Wei, 9820 Merelbeke (BE); MOERMAN, Ingrid, 9810 Nazareth (BE)
(74) Representative: IP HILLS NV

(57) **Abstract**

A device (500) for wireless communication according to a standard communication protocol, the device (500) being adapted to operate at the Physical layer and/or Medium Access Control layer of the protocol, and comprising a Wireless Network Interface Controller, abbreviated WNIC, the WNIC comprising:
- a transmitter (502) and receiver (503);
- a WNIC clock (504), implementing a local timer according to the standard communication protocol,
wherein the device (500) further comprises:
- an interface (511) adapted to receive offset correction information (510) and skew correction information (509) from one or more higher protocol layers;
- an offset correction unit (505) adapted to correct the reference time of the WNIC clock (504) based on the offset correction information (510);
- a skew correction unit (508) adapted to correct the frequency of the WNIC clock
(504) based on the skew correction information (509).

## Description

### Field of the Invention

The present invention generally relates to the field of clock synchronisation in wireless networks. In particular, the invention relates to a solution that offers the accuracy required in time-sensitive wireless networks, while allowing for an increased hardware efficiency.

### Background of the Invention

Clock synchronisation or time synchronisation allows devices, connected in a communication network, to have the same notion of time. A device typically contains multiple cocks that belong to different hardware modules, e.g. the system clock of the host computer, and the clock of the network interface controller. A clock comprises an oscillator and a counter. The oscillator periodically generates ticks at a certain rate, the latter being referred to as the clock frequency. The counter is triggered on each tick and counts the number of ticks from a reference time. In practice, the oscillator shows a time-variant behaviour, due to factors such as voltage, temperature, mechanical stress, aging, etc. This non-ideal behaviour affects the oscillation frequency, and results in a clock time gradually diverging from the 'real' time maintained by a reference clock.

A basic form of clock synchronisation is for example provided by the Time Synchronization Function (TSF), defined by the IEEE 802.11 or Wi-Fi standard. TSF allows stations to synchronize with the centralized Access Point (AP) with which they are connected. Every station maintains a local TSF timer, being a 1 MHz clock provided on the Wi-Fi Wireless Network Interface Controller. The AP periodically broadcasts the time from its TSF timer in dedicated beacon frames, and the receiving station resets the value of its TSF timer to the time broadcasted in the AP's beacons. TSF-based synchronisation does not allow for a high synchronization accuracy, as it does not compensate for the propagation delay between an AP and a station. Moreover, it only performs an offset correction by resetting the local TSF timer. As frequency skew remains uncorrected, the clock quickly diverges again after a synchronization action. Performance requirements for TSF in IEEE 802.11 are thus not particularly high; accuracy and precision in the range of a few microseconds are sufficient.

However, in a time-sensitive network, a more accurate time synchronization is required, in the order of microseconds and less. For example, in a smart factory, production robots which work together on a production line must be synchronised precisely. Exact time synchronisation is also important when robots or drones cooperate, e.g. to collectively move a large object, or to allow for real-time conferencing. In addition, time synchronisation is essential for communication based on TDMA (Time Division Multiple Access): the better the devices are synchronized, the more precisely time slots can be adhered, and the better the available bandwidth is used.

For this purpose, synchronisation schemes allowing for high precision have been developed. In practice, the IEEE 1588 Precision Time Protocol (PTP) has become a de facto standard for clock synchronisation in various applications domains. PTP allows to synchronize clocks on different nodes, wherein a node maintaining a slave clock synchronizes to a node maintaining the master clock. According to PTP, a two-way packet exchange is performed between both nodes, wherein the packets are timestamped upon transmittal and receival by the respective node. From the collected timestamps, the offset between the slave clock and the master clock is calculated, taking into account the propagation delay of the packets. According to this offset value, the slave clock can be adjusted, by correcting the initial clock reference and by correcting the clock frequency to compensate for skew.

PTP was primarily designed for wired networks. For example, an Ethernet Network Interface Controller (NIC) contains a 'PTP clock', being a clock adapted to generate a hardware timestamp whenever a packet is received or transmitted. The synchronisation accuracy of PTP largely depends on how precisely the respective timestamps are associated with the packet transmission and reception events. In Ethernet hardware PTP implementations, timestamps are taken by the NIC hardware, such that deviations between the timestamp and the actual transmission/reception event are relatively stable and can be compensated.

However, the emergence of ad-hoc or mesh-based industrial networks over multiple hops, requires availability of synchronized schemes for not only wired, but also wireless communication. Obtaining highly accurate synchronization in such wireless networks is challenging, because of variable bandwidth conditions impacting the packets propagation time, and uncertainties to the received RF signals, making it hard to determine the accurate start of the packet.

In the current state of the art, various solutions are presented offering PTP for wireless communication. A first group of solutions makes use of software timestamping, meaning that the timestamps are generated at a higher protocol layer by software, for instance within the device's operating system. As commercial off-the-shelf WLAN chipsets are used, no hardware modifications are needed. However, due to uncertainties caused by packets travelling through the network stack, large deviations may occur between the generated timestamps and the actual transmittal/reception events, resulting in a relatively poor synchronisation accuracy. A first example of software PTP is found in "An implementation of IEEE 1588 protocol for IEEE 802.11 WLAN" by Chen et al. (Wireless networks 21.6 (2015): 2069-2085). A second example is found in "Towards high accuracy in IEEE 802.11 based clock synchronization using PTP" by Mahmood et al. (2011 IEEE International Symposium on Precision Clock Synchronization for Measurement, Control and Communication. IEEE, 2011).

A second group of solutions makes use of hardware timestamping: the timestamps are drawn at the Physical or MAC layer by the hardware itself, upon receiving transmission and reception signals from the transceivers. It enables PTP to achieve a very high clock synchronisation accuracy of sub-microseconds over WLAN. However, the hardware timestamping requires use of dedicated hardware: specific chips are developed containing a hardware clock dedicated to the PTP task. The use of specific dedicated hardware makes the solution more expensive and less compatible, thereby hindering adoption in real-life industrial networks. Moreover, the PTP clock is an additional hardware clock, existing besides the available TSF clock, resulting in additional processing and the need for internal synchronisation between both clocks. In other words, the increased synchronisation accuracy goes at the cost of a significant amount of hardware overhead and less efficient hardware utilisation. Solutions in this second group are for example found in "Clock synchronization in IEEE 802.11 wireless LANs using physical layer timestamps" by Exel (2012 IEEE International Symposium on Precision Clock Synchronization for Measurement, Control and Communication Proceedings. IEEE, 2012), and in "Software and hardware prototypes of the IEEE 1588 precision time protocol on wireless LAN" by Kannisto et al. (2005 14th IEEE Workshop on Local & Metropolitan Area Networks. IEEE, 2005).

It is an objective of the present invention to disclose a device and method that resolve the above-described shortcomings of prior-art solutions. More particularly, it is an objective to present a solution for clock synchronisation in a wireless network, offering the accuracy required for time-sensitive networks, and allowing for an increased hardware efficiency.

### Summary of the Invention

According to a first aspect of the present invention, the above identified objectives are realised by a device for wireless communication according to a standard communication protocol, defined by claim 1, the device being adapted to operate at the Physical layer and/or Medium Access Control layer of the protocol, and comprising a Wireless Network Interface Controller, abbreviated WNIC, the WNIC comprising:
- a transmitter adapted to transmit wireless signals according to the standard communication protocol;
- a receiver adapted to receive wireless signals according to the standard communication protocol;
- a WNIC clock, implementing a local timer according to the standard communication protocol, and being adapted to generate a clock time based on a reference time and a clock frequency,
wherein the device further comprises:
- an interface adapted to receive offset correction information and skew correction information from one or more protocol layers higher than the Medium Access Control layer;
- an offset correction unit adapted to correct the reference time of the WNIC clock based on the offset correction information;
- a skew correction unit adapted to correct the frequency of the WNIC clock based on the skew correction information.

Thus, the invention concerns a device for wireless communication according to a standard communication protocol. A standard communication protocol, or wireless networking standard, refers to the set of rules to exchange data in a wireless network. Examples of standard communication protocols are the IEEE 802.11 standard, also referred to as Wi-Fi, Bluetooth (BT), ZigBee, LoRa, etc. Typically, a network protocol is structured as a series of layers, also referred to as the protocol stack, following the OSI (Open Systems Interconnection) reference model. The lowest layer in this model is the Physical layer, defining the characteristics of the network hardware and being responsible for the transmission and reception between a device and a physical transmission medium. The Physical layer is followed by the MAC layer (Medium Access Control) and LLC layer (Logical Link Control), both layers together being referred to as the Data Link layer. The MAC layer is responsible for coordinating access of devices to the shared medium. The MAC layer may be divided into an upper and lower MAC layer, wherein the upper MAC takes care of the interaction with the LLC, and the lower MAC takes care of the interaction with the Physical layer. In general, the lower MAC involves more time critical operations, such as frame transmissions to the Physical layer and acknowledgements, while the upper MAC involves less time critical ones. For example, in Wi-Fi, association of stations with an Access Point is done by the upper MAC, but actual medium access, being time-critical, is handled by the lower MAC. Therefore, typically the upper MAC is implemented in software and the lower MAC in hardware. The device according to the invention is a piece of hardware, adapted to operate at the Physical and/or MAC layer. Typically, the device will operate at the Physical and lower MAC layer.

The device comprises a WNIC (Wireless Network Interface Controller), being a hardware component enabling connection in a wireless network, and working at the first two layers of the OSI model. Depending on the specific communication standard, it may e.g. be referred to as a Wi-Fi chip, Wi-Fi card, Wi-Fi adapter, BT chip, BT card, BT adapter, etc. The WNIC enables a device to communicate via radio waves. For this purpose, it comprises a transmitter and receiver, adapted to transmit respectively receive wireless signals, according to the used communication standard.

Furthermore, the WNIC comprises a clock, here referred to as the WNIC clock. The WNIC clock implements a local timer according to the used communication standard. The WNIC clock runs locally within a node, without being exposed to the outside. It is typically used to handle local processes, e.g. to measure time in a listen-before-talk procedure. An example of a WNIC clock is the TSF clock or TSF timer available on a Wi-Fi WNIC, being a 1 MHz clock. TSF refers to the Time Synchronization Function, defined by the IEEE 802.11 standard, allowing to adjust the local timer of a station according to a clock time broadcasted by an Access Point. However, in the device according to the invention, when Wi-Fi is used as communication protocol, the TSF clock merely refers to the 1 MHz clock available on the Wi-Fi chip; in an embodiment, the original TSF functionality based on timing information received from an AP may be disabled. Another example of a WNIC clock is the 28-bit counter defined by the Bluetooth standard. In summary, the WNIC clock is a hardware component being available in a standard WNIC chip, and being defined within the corresponding communication standard.

The WNIC clock is adapted to generate a clock time based on a reference time and a clock frequency. A clock typically comprises an oscillator and a counter. The oscillator periodically generates ticks at a certain rate, the latter being referred to as the clock frequency. The counter is triggered on each tick and counts the number of ticks from a reference time. The reference time may be an absolute time, the time a device is powered on, or any other chosen reference time. The displayed clock time is typically calculated as the elapsed time since the reference time, wherein the elapsed time is calculated as the number of ticks counted by the counter divided by the clock frequency.

The device further comprises an interface adapted to receive offset correction information and skew correction information from one or more protocol layers higher than the Medium Access Control layer. This means that the device, working at the first two network layers, is adapted to receive information originating from one or more layers situated higher in the protocol stack. In other words, the device, working at the first two network layers, is adapted to receive information that was generated or calculated in one or more layers higher than the MAC layer. For example, the hardware device according to the invention may be operating at the Physical and lower MAC layer, while being adapted to directly receive information transmitted by the upper MAC layer. The information, comprising offset correction information and skew correction information may for example be generated/calculated in the application layer, network layer and the device driver. In an embodiment, the offset and skew correction information consist of values calculated by a clock synchronisation protocol, running in the higher protocol layers.

The device further comprises an offset correction unit and a skew correction unit. The offset correction information received by the device via the interface serves as an input for the offset correction unit. Similarly, the skew correction information received by the device via the interface serves as an input for the skew correction unit. The offset correction unit is adapted to correct the reference time of the WNIC clock, based on the offset correction information. This means that, based on the offset correction information, the time displayed by the WNIC clock is adjusted, in the sense that a new or adapted reference time is used to calculate the clock time. For example, the WNIC clock time may be reset according to a relative correction value or a timestamp comprised in the offset correction information. In this way, the clock time may be corrected for an offset or imbalance with respect to another clock, the latter having a better notion of time.

The skew correction unit is adapted to correct the frequency of the WNIC clock based on the skew correction information. Skew, also referred to as drift, refers to the phenomenon of the clock time showing a gradually increasing error, due to non-ideal behaviour of the oscillator. The time-variant behaviour of the oscillator causes the clock frequency to deviate from the constant theoretical value, such that an error is introduced when calculating the elapsed time based on the theoretical clock frequency. The skew correction unit is adapted to correct the clock time for skew. This e.g. implies that the frequency, used for calculating the displayed clock time, is adapted according to a better estimation, such that the time displayed by the WNIC clock lies closer to the 'real' time.

In summary, the device according to the invention only makes use of the standard available WNIC clock, while allowing to correct the WNIC clock time for offset as well as for skew. As a result, the invention allows to use a standard WNIC clock as a high-precision clock, which goes along with several advantages.

First, the invented device can be used in an apparatus for clock synchronisation at high accuracy. Apart from the hardware according to the invented device, the apparatus then comprises a software stack, e.g. an embedded processor implementing a clock synchronisation algorithm. The clock synchronisation algorithm allows to calculate offset and skew correction information based on timestamps generated by hardware timestamping, thereby relying on the WNIC clock. In an embodiment, the clock synchronisation algorithm may follow the PTP protocol. As the timestamps are generated at or close to the Physical layer, the timestamping is not affected by the time variation of packets going through the network stack. The latter variation does occur in case of prior art solutions using software timestamping, thereby reducing the synchronisation accuracy obtained by software based solutions. Moreover, in the invention the clock time correction does not only involve a correction for offset, as is e.g. the case in standard TSF, but also for skew. Therefore, after a synchronisation action, the clock uses a corrected frequency, such that the clock will not diverge as quickly as is the case when purely an offset correction of the clock time is done. As a result, the device according to the invention allows for high precision clock synchronisation, as is required in a time-sensitive wireless network.

Secondly, the device uses a standard available WNIC, being a Commercial-Off-The-Shelf (COTS) component, and only requires minor hardware modifications for implementing the device. Indeed, opposed to prior art solutions using a dedicated hardware clock for synchronisation purposes, the invented device purely relies on the already available WNIC clock. In other words: instead of using an additional dedicated clock for hardware timestamping, the existing WNIC clock is leveraged, with minimal hardware modifications to achieve the same purpose. This contributes to a cheaper and more compatible solution, thereby facilitating adoption in real-life industrial networks. Moreover, opposed to solutions using a dedicated PTP clock, wherein the PTP clock exists besides the WNIC clock, the device only uses the WNIC clock. The use of just one clock, instead of two, results in a reduced amount of hardware logic utilisation, and therefore a more efficient hardware utilisation. Moreover, it avoids the additional complexity involved with the need for synchronising two internal clocks. Thus, the invented device contributes to an economic solution in terms of hardware footprint, and an overall increase of hardware efficiency, while still allowing for high precision clock synchronisation.

Finally, use of the invented device is not limited to applications concerning high precision clock synchronisation in a time-sensitive wireless network. Indeed, the invention may also bring benefits for other applications that currently rely on the standard TSF implementation for synchronisation. The Wi-Fi standard provides basic synchronisation across TSF clocks in a Basic Service Set (BSS), but does not adopt a link delay measurement and neither applies a frequency correction. Hence, only limited synchronisation accuracy is reached when relying on TSF. Despite of this fact, TSF is widely used in various prior art applications. In a first example, TSF is used in a Wi-Fi BSS for TDMA, wherein due to the poor synchronisation accuracy, substantial guard intervals have to be foreseen in a TDMA slot. In another example, TSF is used to coordinate transmission from a Wi-Fi BSS to avoid interfering with a sensor network, wherein it is required to mute Wi-Fi transmission somewhat in advance to account for the synchronisation error. As a final example, the IEEE 802.11 standard also uses TSF for maintaining coordination between AP's in overlapping BSS. Thus, using the invented device, instead of relying on the inaccurate TSF synchronisation, enables such applications to greatly improve their performance.

Optionally, according to claim 2, the device is adapted to generate a clock time being corrected for offset and skew, while only relying on the WNIC clock, without using any dedicated hardware clock. This implies that, when considering the hardware design of the invented device, it shows that the corrected clock time results from the standard WNIC clock, not from a dedicated clock that exists besides the standard WNIC clock. The invention therefore differentiates from prior art solutions using a dedicated PTP clock: in such prior art solutions the corrected clock time is the result of a dedicated PTP hardware clock, while the standard WNIC clock is also present but does not generate a for skew corrected clock time. On the other hand, the invention differentiates from prior art solutions merely relying on the standard TSF synchronisation: in such solutions only the TSF clock is used, but no frequency correction is done. The invention is therefore advantageous over the existing prior art solutions, as it combines a hardware efficient design with high precision clock synchronisation.

Optionally, according to claim 3, the standard communication protocol is a Wi-Fi protocol defined by the IEEE 802.11 standard, and the WNIC clock is the Time Synchronisation Function clock, abbreviated TSF clock, defined by the IEEE 802.11 standard and embedded in a Wi-Fi WNIC. A Wi-Fi WNIC may also be referred to as Wi-Fi chip, Wi-Fi card, or Wi-Fi adapter. A standard Wi-Fi WNIC contains a 1 MHZ TSF clock, as defined in de Wi-Fi standard. TSF refers to the Time Synchronization Function, defined by the IEEE 802.11 standard, allowing to adjust the local timer of a station according to a clock time broadcasted by an Access Point. However, in the device according to the invention, the TSF clock merely refers to the 1 MHz clock available on the Wi-Fi chip; in an embodiment, the original TSF functionality based on timing information received from an AP may be disabled.

Optionally, according to claim 4, the device comprises a timestamping unit for hardware timestamping, the timestamping unit being adapted to generate a timestamp upon receipt of a data packet by the receiver and/or upon transmission of a data packet by the transmitter. Hardware timestamping implies that timestamps are generated by the hardware itself, at the Physical or MAC layer, in particular the lower MAC layer, upon transmission or receipt of a packet preamble. The use of hardware timestamping contributes to obtaining a high synchronisation accuracy. Such a high accuracy cannot be obtained when using software timestamping, wherein timestamps are generated in device drivers or a at a higher layer of the network stack. Indeed, in software timestamping, timestamps are substantially affected by the time variation of packets going through the network stack, thereby introducing an unacceptable synchronisation error.

Optionally, according to claim 5, the offset correction information and skew correction information are values resulting from a clock synchronisation algorithm implemented at one or more higher protocol layers, and the device comprises a second interface, adapted to return timestamps generated by the timestamping unit to the one or more higher protocol layers, for use by the clock synchronisation algorithm. A clock synchronisation algorithm comprises instructions to calculate offset and skew correction values as defined in a specific protocol. Typically, the protocol specifies a two-way packet exchange or measurement of a round-trip time (RTT), and the correction values are calculated based on the related timestamps. For example, the clock synchronisation algorithm is implemented on an embedded processor, adapted to exchange information with the hardware device. In particular, the device comprises a second interface, adapted to return timestamps generated by hardware timestamping towards the synchronisation algorithm. In an embodiment, the clock synchronisation algorithm may be based on the PTP standard. In other embodiments, the algorithm may be based on another standard, an RTT-based synchronisation scheme, or a customized protocol.

Optionally, according to claim 6, the clock synchronisation algorithm is defined by a Precision Time Protocol, abbreviated PTP. The original PTP protocol is specified in IEEE 1588 and is standard-compliant. The protocol defines a two-way packet exchange between a slave node and master node, and calculation of the offset between both nodes taking into account the propagation delay between both nodes. In the context of this application, PTP refers to the originally defined PTP standard, as well as protocols derived from the original standard, like gPTP (generalized Precision Time Protocol).

Optionally, according to claim 7, the WNIC clock comprises a counter and the clock time is increased with a standard duration upon increase of the counter by one. For example, when using the Wi-Fi standard and 1MHz TSF clock, this standard duration is 1 microsecond. Furthermore, according to claim 7, the skew correction unit is adapted to correct the frequency of the WNIC clock by increasing the counter by zero or two instead of by one upon reaching a limit value by the counter, the limit value being derivable from the skew correction information. This implies that a specific hardware design is used to implement the frequency correction. For example, a skew correction value may be calculated on an embedded processor, and subsequently be returned to the invented device. The skew correction value is then used by the device to periodically adjust the counter of the clock. In other words: instead of correcting the clock frequency by adding an adapted elapsed time to the reference time on each tick, the standard duration is still added, but after a specific number of ticks the counter is increased by 0 or 2 instead of by 1. The latter specific number of ticks is derived from the skew correction information calculated by the clock synchronisation algorithm.

Optionally, according to claim 8, the standard communication protocol is a Wi-Fi protocol, and the Wi-Fi WNIC comprises an adjustment unit adapted to adjust the reference time of the TSF clock according to the TSF standard. According to TSF, the TSF clock available at the WNIC of a station may be synchronised based on timing information received from an Access Point, wherein only the offset or reference time of the TSF clock is adjusted. Therefore, a standard Wi-Fi WNIC already comprises a unit adapted to implement a clock offset correction. As a result, the existing adjustment unit may be used as offset correction unit on the device, thereby maximally reusing available COTS hardware. In other words, in such an embodiment, the offset correction unit of the device corresponds to the adjustment unit defined by TSF. The original TSF functionality, allowing to receive timing information from an AP, may then be disabled, and replaced by the offset correction functionality defined by the synchronisation protocol running in the higher protocol layers.

Optionally, according to claim 9, the skew correction unit is implemented by means of a Field-Programmable Gate Array, abbreviated FPGA. This means that programmable logical components are used to implement the skew correction unit. In an embodiment, the standard hardware components available on a Wi-Fi chip may be used to implement the offset correction unit, as TSF already provides an adjustment unit. However, no skew correction unit is available on a standard Wi-Fi chip. Use of an FPGA then allows to implement the required hardware modifications as compared to a COTS Wi-Fi chip.

According to a second aspect of the present invention, the above identified objectives are realized by an apparatus, defined by claim 10, the apparatus comprising:
- a device according to the first aspect of the invention;
- a processor adapted to operate at one or more protocol layers higher than the Medium Access Control layer, the processor implementing computer-executable instructions for causing the apparatus to perform clock synchronisation with respect to a master clock, the clock synchronisation comprising:
   ∘ instructing the transmitter and receiver to perform a two-way packet exchange with another apparatus, the other apparatus comprising the master clock, while timestamping transmitted and received packets by the timestamping unit;
   ∘ calculating the offset correction information and skew correction information from timestamps generated by the timestamping unit;
   ∘ transmitting the offset correction information and skew correction information to the device through the interface.

Typically, the apparatus will serve as a network node in the wireless communication network. When acting as a slave node, the apparatus may synchronise its clock time with another node acting as master node. For this purpose, the apparatus comprises a lower part, comprising the hardware device according to the first aspect of the invention, and an upper part comprising a processor. The processor is for example an embedded processor, serving as software stack implementing a clock synchronisation protocol. The upper part defines how to execute the synchronisation protocol, i.e. which packets need to be exchanged and how the correction values need to be calculated. The lower part is responsible for transmission/reception of the packets, hardware timestamping, and actual correction of the clock.

Optionally, according to claim 11, the clock synchronisation is defined by a Precision Time Protocol, abbreviated PTP, and the apparatus is adapted to obtain a PTP synchronized clock time while only relying on the WNIC clock. This implies the upper part uses PTP as a synchronisation protocol, while in the lower part clock correction is done while only relying on the standard WNIC clock.

Optionally, according to claim 12, the apparatus contains two different hardware clocks, corresponding to a system clock and the WNIC clock respectively, and the apparatus does not contain a dedicated PTP hardware clock for providing a synchronised time. The apparatus according to this embodiment thus comprises two clocks: the system clock and the WNIC clock. It therefore differentiates from prior-art solutions using a dedicated PTP hardware clock, as those solutions comprise three different clocks: the system clock, the WNIC clock, and an additional clock dedicated to the PTP task.

According to a third aspect of the present invention, the above identified objectives are realized by a method for clock synchronisation with a master clock, defined by claim 13, the method comprising:
- providing an apparatus according to the second aspect of the invention;
- initiating a two-way packet exchange by the transmitter and receiver, the two-way packet exchange being performed with another apparatus comprising the master clock, while timestamping transmitted and received packets by the timestamping unit;
- transmitting timestamps generated by the timestamping unit to a clock synchronisation algorithm implemented at the one or more higher protocol layers;
- calculating the offset correction information and skew correction information by the clock synchronisation algorithm;
- transmitting the offset correction information and skew correction information to the device through the interface;
- correcting the reference time and the frequency of the WNIC clock, by the offset respectively frequency correction unit, based on the offset respectively skew correction information;
- obtaining a synchronised clock time from the WNIC clock.

### Brief Description of the Drawings

Fig. 1 gives a conceptual representation of a standard Wi-Fi WNIC, according to the state of the art.
Fig. 2 illustrates a two-way packet exchange as defined by a PTP protocol.
Fig. 3 illustrates the concept of hardware timestamping, as opposed to software timestamping.
Fig. 4 gives a conceptual representation of a solution making use of a dedicated PTP hardware clock, according to the state of the art.
Fig. 5 gives a conceptual representation of a device according to an embodiment of the invention.
Fig. 6 gives a conceptual representation of an apparatus according to an embodiment of the invention.
Fig. 7 and Fig. 8 show a specific implementation of an apparatus according to an embodiment of the invention.

### Detailed Description of Embodiment(s)

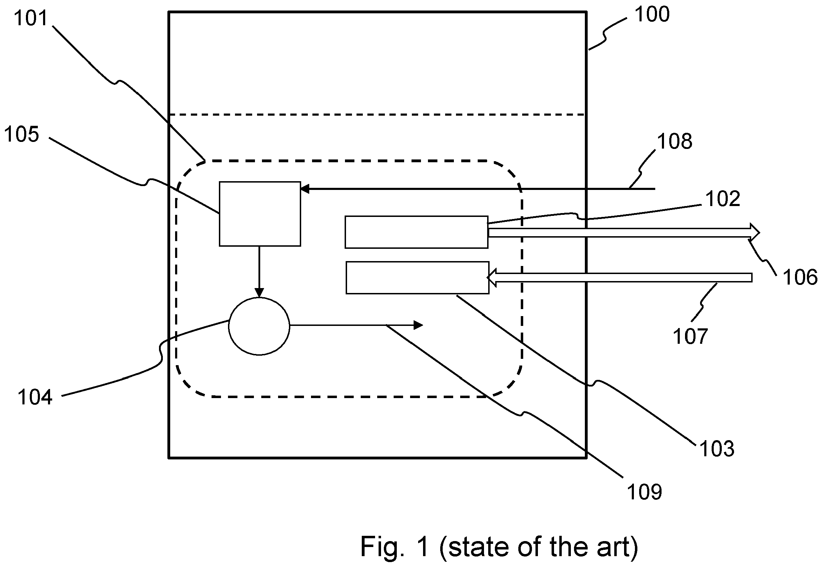

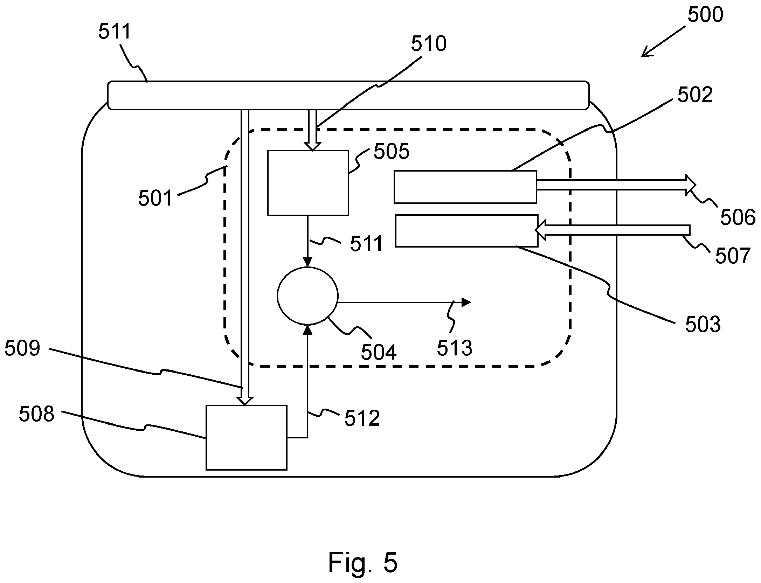

Fig. 1 to Fig. 4 illustrate state-of-the-art solutions or general methodologies. Fig. 5 to Fig. 8 illustrate embodiments according to the invention.

Fig. 1 conceptually shows a WNIC adapted to enable wireless communication according to a standard communication protocol, in this case the Wi-Fi protocol. A Wi-Fi WNIC 101, Wi-Fi chip 101 or Wi-Fi card 101 is comprised in an apparatus 100, the latter operating as a node in a wireless network applying the Wi-Fi standard. The WNIC 101 comprises a transmitter 102, a receiver 103, a TSF clock 104 and an adjustment unit 105. The transmitter 102 is adapted to transmit radio signals 106 over the Wi-Fi network, while the receiver 103 is adapted to receive such signals 107 from another node in the network. The clock 104 is the TSF clock defined in the Wi-Fi standard, being a 1 MHz clock. The clock 104 acts as a local timer, running locally within the node 100 and handling local processes, e.g. measuring time in a listen-before-talk procedure. The adjustment unit 105 is adapted to implement the TSF functionality: based on timing information 108 broadcasted by an Access Point (AP), the clock time 109 is adjusted. This adjustment only involves an offset correction of the clock time 109, i.e. the clock time 109 of the station 100 is reset to the value broadcasted by the Access Point. In this, the time communicated by the AP is merely taken over by the station; the propagation delay between AP and station is not being taken into account. Because of the latter two aspects, TSF does not allow for clock synchronisation at high precision or accuracy. The clock time 109 quickly diverges after having been reset: IEEE 802.11 has specified ±20 ppm frequency skew for WLAN chipsets, which can additionally introduce Clock Synchronisation errors of up to ca. 40 microseconds per second if basic TSF based Clock Synchronisation (without rate correction) is applied every second.

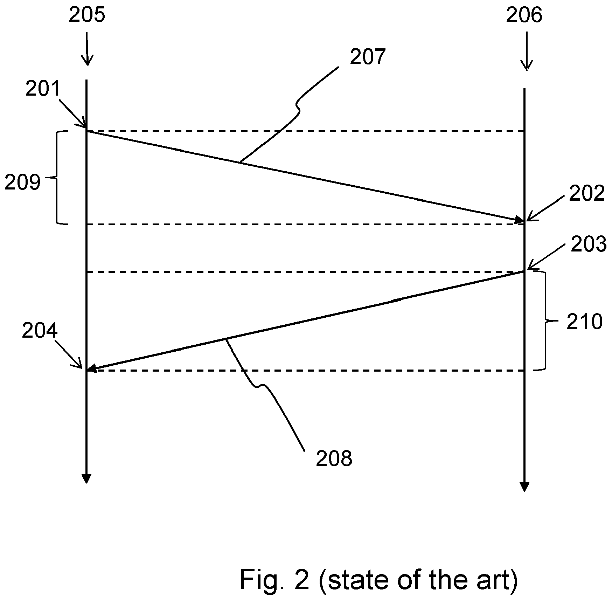

To allow for clock synchronisation with higher precision and accuracy, synchronisation schemes like the Precision Time Protocol (PTP) have been developed. The protocol makes use of a two-way packet exchange, as is illustrated in Fig. 2. The figure illustrates the periodic packet exchange taking place between a node 205, containing a master clock, and a node 206, containing a slave clock. The master clock serves as reference clock, while the slave clock needs to be synchronised with respect to the master clock. At time 201, a timing packet 207 exits node 205. This packet is received by node 206 at time 202. The propagation delay between both nodes is indicated as 209. Later at time 203, node 206 sends a packet 208, which is received by node 205 at time 204. The propagation delay in the latter packet exchange is indicated as 210. If symmetric propagation delays are assumed, i.e. delay 209 is equal to delay 210, then the offset or bias between the slave clock and the master clock can be calculated as ((time 202 - time 201) - (time 204 - time 203))/2. The obtained offset or bias is then used to correct the clock time of the slave, by correcting its reference time, i.e. a correction for offset, as well as its frequency, i.e. a correction for skew. The times mentioned in the aforementioned formula are obtained by timestamping in the respective nodes, upon transmission or receipt of a packet. In practice, the synchronisation accuracy of PTP depends on how precisely the four timestamps are associated with the packet transmission and reception events. Usually there are errors between the time the timestamps are taken and the time the transmission/reception events happen.

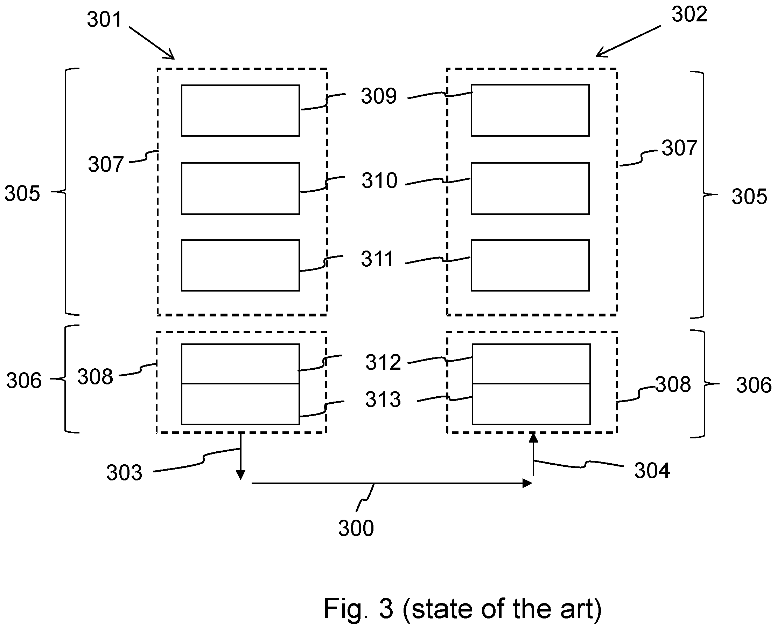

In general, timestamping for PTP can be achieved via hardware or via software. Fig. 3 illustrates the difference between hardware timestamping and software timestamping. The figure shows different layers of the network stack, namely the Physical layer 313, the lower MAC (Medium Access Control) layer 312, the Device driver 311, the Network layer 310, and the Application layer 309. The first two layers 313, 312 are found in a chipset 308, while the three highest layers 311, 310, 309 are situated in the Operating System 307. Note that the upper MAC layer is not shown in the figure, but is in practice also situated in the Operating system 307. A packet may be transmitted from a first node 301, to a second node 302, wherein a timestamp is taken by the first node 301 upon transmission 303, and a timestamp is taken by the second node 302 upon reception 304. Between the transmission event 303 and the reception event 304, a propagation delay 300 occurs. Software timestamping means that timestamps are generated at the higher protocol layers by software, within the operating system 307. Software timestamping thus takes place in the region indicated as 305 in the protocol stack of Fig. 3. The uncertainties related with packets travelling through the network stack results in synchronisation errors at the microsecond level, such that the performance of software based PTP in terms of accuracy is relatively low. Hardware timestamping means that timestamps are generated at the Physical layer 313 or lower MAC layer 312 by the hardware itself, see 306. As hardware timestamping is realized at or close to the Physical layer of the radio, it enables PTP to achieve substantially higher accuracies than is the case with software timestamping.

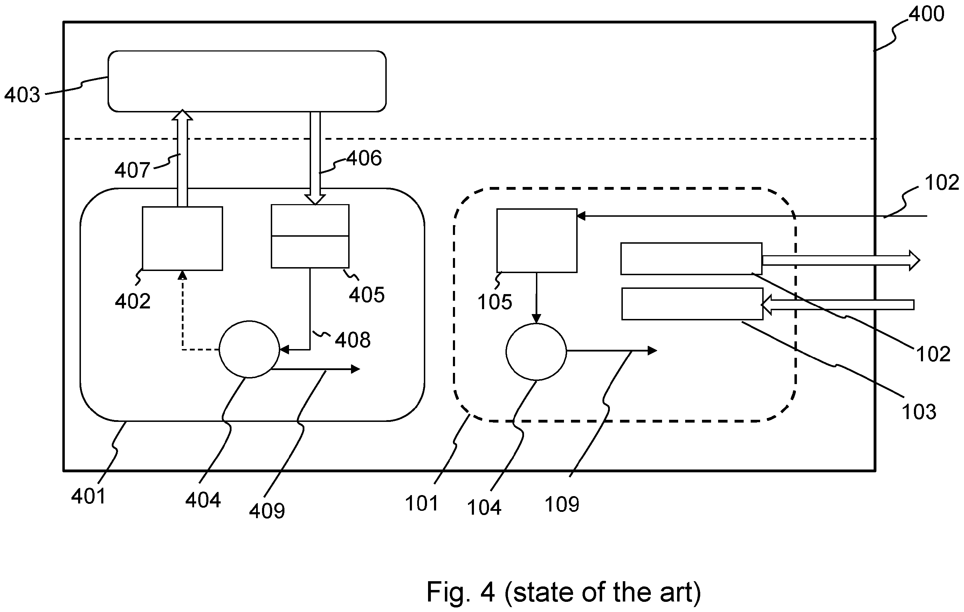

In the state of the art, hardware timestamping is applied in wireless PTP solutions relying on a dedicated hardware clock. Such a prior art solution is illustrated in Fig. 4. An apparatus 400 operates as a node in a wireless network applying the Wi-Fi standard. The apparatus 400 comprises a standard Wi-Fi WNIC 101, which is identical to the Wi-Fi WNIC 101 shown in Fig. 1. The Wi-Fi WNIC 101 comprises a TSF clock 104, an adjustment unit 105 and a transceiver 102, 103. For PTP purposes, the apparatus 400 comprises a specially developed chip 401, comprising a dedicated clock 404. Both the Wi-Fi WNIC 101 and the chip 401 operate at the Physical and lower MAC layer. Moreover, the apparatus 400 comprises a processor 403, operating at the higher network layers. The processor 403 implements a clock synchronisation algorithm, according to the PTP protocol. A timestamping unit 402 enables hardware timestamping, and generated timestamps 407 are given to the processor 403, for use by the clock synchronisation algorithm. In turn, calculated correction values are transferred towards a correction unit 405 comprised in the dedicated chip 401. The correction unit 405 is adapted to correct the clock time 409, see 408, wherein an offset correction as well as a skew correction are applied. Fig. 4 clearly shows that in this type of prior art solutions, a dedicated PTP clock 404 exists besides the already available TSF clock 104. The need for an additional dedicated PTP clock 404 therefore results in an increased hardware footprint and less efficient hardware utilisation. Moreover, internal synchronisation between both clocks 104 and 404 may be required, thereby introducing an additional complexity. Finally note that apart from the TSF clock 104 and the dedicated PTP clock 404, the apparatus 400 may additionally comprise a system clock. In that case the apparatus 400 comprises three different clocks.

Fig. 5 to Fig. 8 illustrate an embodiment according to the invention.

Fig. 5 shows a device 500 for wireless communication according to a standard communication protocol. We will describe an embodiment wherein the IEEE 802.11 or Wi-Fi protocol is used; other embodiments are possible wherein another standard communication protocol is used. The device 500 comprises a WNIC 501, which in this case is a Wi-Fi card 501. The WNIC 501 comprises standard hardware components, namely a transmitter 502 and receiver 503, adapted to transmit respectively receive wireless signals 506, 507 according to the Wi-Fi standard, and a WNIC clock 504. In the shown embodiment, the WNIC clock 504 is the TSF clock, i.e. the 1 MHz clock according to the Wi-Fi standard. The WNIC clock 504 is adapted to generate a clock time 513 based on a reference time TO and the clock frequency or rate R. The elapsed time since TO is thus n/R, n being the number of ticks counted by the counter of the clock, and the clock time 513 may be calculated as TO + n/R.

The device 500 further comprises an interface 511, through which offset correction information 510 and skew correction information 509 may be received. The offset correction information 510 is given as an input to an offset correction unit 505, and the skew correction information 509 is given as an input to a skew correction unit 508. The offset correction unit 505 is adapted to correct the reference time TO of the clock 504 based on the offset correction information 510, as is indicated by 511 in Fig. 5. The skew correction unit 508 is adapted to correct the frequency R of the clock 504 based on the skew correction information 509, as is indicated by 512 in Fig. 5. After correction, the clock displays a clock time 513 being a better representation of what is considered to be the real time.

In the embodiment of Fig. 5, the offset correction unit 505 is implemented by making use of the adjustment unit 105 already available on a Wi-Fi chip, see Fig. 1. The standard TSF functionality is then disabled, and the input towards the offset correction unit 505 is now the offset correction information 510 received via the interface 511, instead of the timing information 108 broadcasted by an AP. Comparing the device 500 of Fig. 5 to the standard Wi-Fi WNIC 101 of Fig. 1, shows that the device 500 may therefore be considered as an 'extended' WNIC, wherein only minor hardware modifications are needed with respect to a standard Wi-Fi WNIC. In another embodiment however, the offset correction unit 505 may be implemented in another way, without making use of the TSF adjustment unit 105, but still adapted to correct the standard TSF clock 504.

The device 500 can be used in an apparatus 600, for PTP clock synchronisation, as will further be explained underneath. However, the device 500 may also be used for other applications: any other application that currently relies on the standard, inaccurate, TSF implementation for synchronisation, may benefit from using the invented device 500.

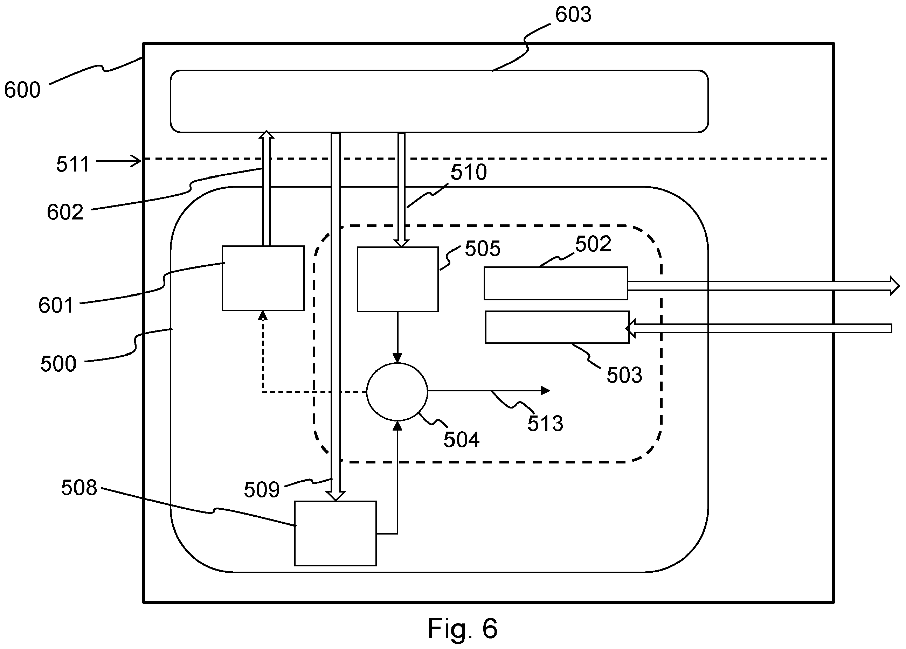

Fig. 6 shows an apparatus 600 according to an embodiment of the invention, the apparatus 600 adapted to operate as a node in a Wi-Fi network. The apparatus 600 comprises a lower part, comprising the device 500, and an upper part, comprising an embedded processor 603. The device 500 is adapted to operate at the Physical and MAC layer, in particular the lower MAC layer, while the processor 603 is adapted to operate at the higher network layers. The processor 603 implements a clock synchronisation algorithm, e.g. according to the PTP protocol, for synchronising the clock 504 with respect to a clock maintained by a master node. For this purpose, the device 500 comprises a timestamping unit 601, adapted for hardware timestamping, relying on the TSF clock 504. In an embodiment, the apparatus 600 may also comprise a system clock, apart from the TSF clock 504 of the WNIC.

During operation, the following method may be executed by the apparatus 600:
- the transmitter 502 and receiver 503 are instructed to initiate a two-way packet exchange with the master node, according to the PTP protocol, as was explained in Fig. 2;
- upon transmittal and receival of packet preambles during the two-way packet exchange, the packets are timestamped by the timestamping unit 601;
- the generated timestamps 602 are transmitted to the clock synchronisation algorithm running on the embedded processor 603, via the interface 511;
- offset correction information 510 and skew correction information 509 are calculated by the clock synchronisation algorithm, as defined in the PTP protocol;
- the offset correction information 510 and said skew correction information 509 are returned to the device 500 via the interface 511;
- the offset correction information 510 is received by the offset correction unit 505, and the reference time TO of the TSF clock 504 is corrected based on the offset correction information 510;
- the skew correction information 509 is received by the skew correction unit 508, and the frequency R of the TSF clock 504 is corrected based on the skew correction information 509;
- a synchronised clock time 513, being corrected for offset as well as for skew, is obtained from the TSF clock 504.

Fig. 6 show that the invented device 500 and apparatus 600 only rely on the standard TSF clock 504 for obtaining a synchronised clock time 513, the latter being corrected for offset as well as for skew. As no additional dedicated PTP clock is needed, the invention results in an efficient hardware utilisation and easy adoption in real-life industrial networks. Moreover, the hardware timestamping and frequency correction, result in clock synchronisation at high accuracy.

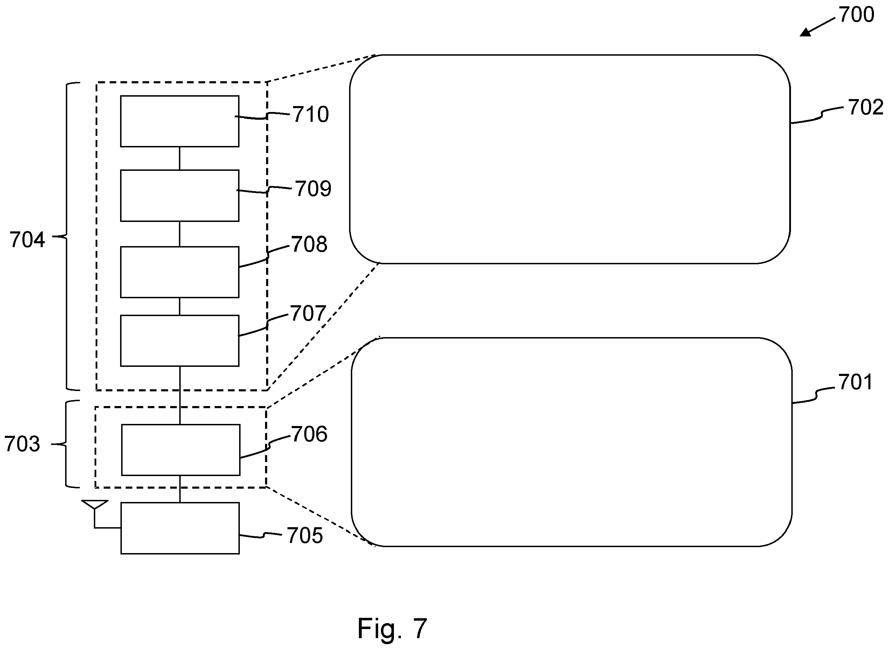

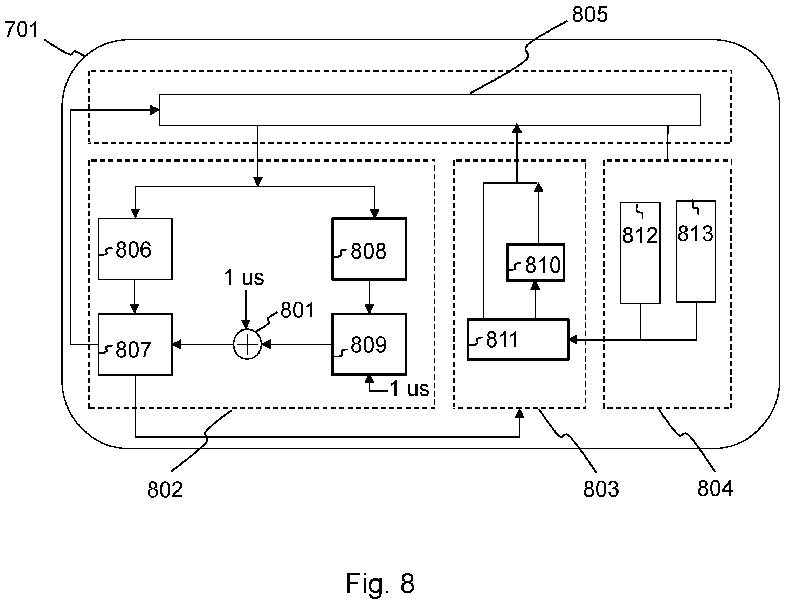

Finally, Fig. 7 and Fig. 8 show a specific design of an apparatus 700 according to the invention. The implementation makes use of openwifi, an open-source Wi-Fi chip design. The apparatus 700 comprises a PTP software stack 702, realized on an embedded processor 704, and a hardware device 701, implemented by means of an FPGA 703. Fig. 7 shows where different parts of the architecture can be situated in the network stack. The PTP software stack 702 is operating at the level of the User Application layer 710, Socket layer 709, Networking layer 708 (UDP or TCP/IP and mac80211) and Wi-Fi Device driver 707. The hardware device 701 operates at the Wi-Fi Lower MAC layer and Physical layer, both layers together being represented as 706 in the figure. The radio frequency front-end is represented as 705 in the figure.

To implement the PTP software stack 702, Linuxptp software is used as a userspace application. Linuxptp software is the Linux-based PTP implementation existing for wired networks, and allows to calculate values needed for offset and skew correction. Furthermore, the radio device driver was modified, making it able to interface with the clock unit 802. The Radio driver of the upper part 702 comprises two call back functions, one of them to perform clock offset correction, and one of them to perform skew correction. In particular, Linuxptp is adapted to calculate a ppb (part per billion) value, based on received hardware timestamps, and then sends this ppb value to the radio driver. The radio driver uses the ppb value to calculate a skew correction value Sc, which corresponds to the duration in microseconds that the clock is adjusted periodically based on the ppb value. Sc is calculated as: Sc = 1E15/(Fr × ppb), wherein Fr is the theoretical clock frequency, being 1 MHz in this case. For instance, when the quantified ppb value is 78,096, the actual frequency Fr is 1.000078096 MHz, and the calculated Sc value is 12.805 microseconds.

Fig. 8 gives a more detailed view of the design of the hardware device 701. The device 701 comprises a clock unit 802, a timestamp unit 803, an openwifi datapath 804, and existing openwifi interface 805. The openwifi datapath 804 or IEEE 802.11 datapath is employed for sending and receiving PTP packets, see transmitter 812 and receiver 813. The timestamp unit 803 comprises a controller 811 and a FIFO (First-In-First-Out) 810. The controller 811 is in charge of executing timestamping upon frame preamble transmission or reception, and storing it into the FIFO 810. The timestamp values are then read by the radio driver comprised in the upper part 702. The radio driver performs all these actions inside the Interrupt Service Routine. Using the timestamps, Linuxptp then calculates an offset correction value, and the aforementioned ppb value. The ppb value is then used by the radio driver to calculate the skew correction value Sc.

The clock unit 802 makes use of a standard TSF clock 807, the time of which is increased by one microsecond, see 801 in the figure. The clock unit 802 further comprises an offset correction register 806, adapted to correct the reference time or offset of the TSF clock 807. In the shown embodiment, the offset correction register makes use of the adjustment unit, being standard available on a Wi-Fi chip for TSF clock adjustment. Furthermore, the clock unit 802 comprises a Skew Correction Register 808 and a Skew Correction Counter 809. These two elements are used to implement a skew correction unit. Indeed, the Sc value, calculated by the radio driver, is loaded into the Skew Correction Register 808. The Sc value is an upper limit for the Skew Correction Counter 809: the Skew Correction Counter 809 increments with the TSF clock at 1MHz operating frequency, and upon reaching the Sc value the Skew Correction Counter 809 overflows and performs the skew correction of the TSF clock. The latter skew correction is realized by manipulating the TSF counter. In normal situations, the TSF counter is incremented by one after each 1 microsecond according to the theoretical rate of local oscillator. Upon skew correction however, the TSF counter is either incremented by two or zero depending upon the sign of carry bit. For instance, the Skew Correction Counter 809 may perform skew correction after each 12,805 counts in the example given in the previous paragraph. In this way, a very simple hardware design is obtained to correct the actual frequency of the TSF clock 807.

The design of Fig. 8 shows that only minor hardware modifications are needed compared to a standard available Wi-Fi chip. Hardware elements that have to be added to a COTS Wi-Fi chip are indicated with a bold line, and consist of: the Skew Correction Register 808, Skew Correction Counter 809, Controller 811 and FIFO 810.

The architecture presented in Fig. 7 and Fig. 8 allows for an efficient hardware utilisation. Hardware logic utilisation may be Look Up Tables (LUT) or Flip Flops (FF). Tests showed that the presented design of Fig. 7 and Fig. 8 saves 23% LUTs and 38% FFs as compared to a prior art solution making use of a dedicated hardware PTP clock added on top of the TSF clock, the latter prior art solution being shown in Fig. 4. Finally, the presented design of Fig. 7 and Fig. 8 allows for a clock synchronisation at high accuracy and precision. For example, the Wi-Fi Alliance has introduced the Wi-Fi TimeSync certificate to specify the requirement of Clock Synchronisation (CS) performance between multiple Wi-Fi devices. The certification requires the 90th percentile (P90) of the absolute CS error (P90) to be within 5.5 microseconds of the observed time (i.e., 120 sec). Tests using the presented design of Fig. 7 and Fig. 8 showed that a P90 value is reached of 1.40 microseconds, being well below the 5.5 microseconds requirement of the Wi-Fi TimeSync certificate.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (500) for wireless communication according to a standard communication protocol,
said device (500) being adapted to operate at the Physical layer and/or Medium Access Control layer of said protocol, and comprising a Wireless Network Interface Controller, abbreviated WNIC, said WNIC comprising:
- a transmitter (502) adapted to transmit wireless signals (506) according to said standard communication protocol;
- a receiver (503) adapted to receive wireless signals (507) according to said standard communication protocol;
- a WNIC clock (504), implementing a local timer according to said standard communication protocol, and being adapted to generate a clock time based on a reference time and a clock frequency,
**CHARACTERIZED IN THAT**:
said device (500) further comprises:
- an interface (511) adapted to receive offset correction information (510) and skew correction information (509) from one or more protocol layers higher than said Medium Access Control layer;
- an offset correction unit (505) adapted to correct said reference time of said WNIC clock (504) based on said offset correction information (510);
- a skew correction unit (508) adapted to correct said frequency of said WNIC clock (504) based on said skew correction information (509).

2. A device (500) according to claim 1,
wherein said device (500) is adapted to generate a clock time (513) being corrected for offset and skew, while only relying on said WNIC clock (504), without using any dedicated hardware clock.

3. A device (500) according to one of the previous claims,
wherein said standard communication protocol is a Wi-Fi protocol defined by the IEEE 802.11 standard, and said WNIC clock (504) is the Time Synchronisation Function clock, abbreviated TSF clock (504), defined by said IEEE 802.11 standard and embedded in a Wi-Fi WNIC.

4. A device (500) according to one of the previous claims,
wherein said device (500) comprises a timestamping unit (601) for hardware timestamping, said timestamping unit (601) being adapted to generate a timestamp (602) upon receipt of a data packet by said receiver (503) and/or upon transmission of a data packet by said transmitter (502).

5. A device (500) according to claim 4,
wherein said offset correction information (510) and said skew correction information (509) are values resulting from a clock synchronisation algorithm implemented at said one or more higher protocol layers,
and said device (500) comprises a second interface (511), adapted to return timestamps (602) generated by said timestamping unit (601) to said one or more higher protocol layers, for use by said clock synchronisation algorithm.

6. A device (500) according to claim 5,
wherein said clock synchronisation algorithm is defined by a Precision Time Protocol, abbreviated PTP.

7. A device (500) according to claim 5 or 6,
wherein said WNIC clock (504) comprises a counter and said clock time is increased with a standard duration upon increase of said counter by one,
and wherein said skew correction unit (508) is adapted to correct said frequency of said WNIC clock (504) by increasing said counter by zero or two instead of by one upon reaching a limit value by said counter, said limit value being derivable from said skew correction information.

8. A device (500) according to claim 3,
wherein said Wi-Fi WNIC (501) comprises an adjustment unit (505) adapted to adjust said reference time of said TSF clock (504) according to the TSF standard, and said device (500) is adapted to correct said reference time of said WNIC clock (504) by providing said offset correction information (510) as an input to said adjustment unit (505).

9. A device (500) according to one of the previous claims,
wherein said skew correction unit (508) is implemented by means of a Field-Programmable Gate Array, abbreviated FPGA.

10. An apparatus (600) comprising:
- a device (500) according to claim 4 to 9;
- a processor (603) adapted to operate at one or more protocol layers higher than said Medium Access Control layer, said processor (603) implementing computer-executable instructions for causing said apparatus (600) to perform clock synchronisation with respect to a master clock, said clock synchronisation comprising:
∘ instructing said transmitter (502) and receiver (503) to perform a two-way packet exchange with another apparatus, said other apparatus comprising said master clock, while timestamping transmitted and received packets by said timestamping unit (601);
∘ calculating said offset correction information (510) and said skew correction information (509) from timestamps (602) generated by said timestamping unit (601);
∘ transmitting said offset correction information (510) and said skew correction information (509) to said device (500) through said interface (511).

11. An apparatus (600) according to claim 10,
wherein said clock synchronisation is defined by a Precision Time Protocol, abbreviated PTP, and said apparatus (600) is adapted to obtain a PTP synchronized clock time (513) while only relying on said WNIC clock (504).

12. An apparatus (600) according to claim 11,
wherein said apparatus (600) contains two different hardware clocks, corresponding to a system clock and said WNIC clock (504) respectively, and said apparatus (600) does not contain a dedicated PTP hardware clock for providing a synchronised time.

13. A method for clock synchronisation with a master clock, comprising:
- providing an apparatus (600) according to claim 10 to 12;
- initiating a two-way packet exchange by said transmitter (502) and receiver (503), said two-way packet exchange being performed with another apparatus comprising said master clock, while timestamping transmitted and received packets by said timestamping unit (601);
- transmitting timestamps (602) generated by said timestamping unit (601) to a clock synchronisation algorithm implemented at said one or more higher protocol layers;
- calculating said offset correction information (510) and said skew correction information (509) by said clock synchronisation algorithm;
- transmitting said offset correction information (510) and said skew correction information (509) to said device (500) through said interface (511);
- correcting said reference time and said frequency of said WNIC clock (504), by said offset (505) respectively frequency correction unit (508), based on said offset (510) respectively skew correction information (509);
- obtaining a synchronised clock time (513) from said WNIC clock (504).
